# FASCICULE DE BREVET EUROPEEN

(11) **EP 2 787 234 B1**
(45) Date de publication et mention de la délivrance du brevet: **31.08.2016**
(21) Numéro de dépôt: 14162501.2
(22) Date de dépôt: 28.03.2014
(51) Int. Cl.: F16C 35/077, F16C 19/16, G04B 31/004, G04B 5/19, F16C 35/04

(54) **Pièce mécanique pour applications horlogères**
Mechanisches Teil für Uhranwendungen
Mechanical part for clock applications

(30) Priorité: 02.04.2013 CH 7012013
(43) Date de publication de la demande: 08.10.2014
(73) Titulaire: MPS Micro Precision Systems AG, 2504 Biel-Bienne 8 (CH)
(72) Inventeur: Laager, Alain, 2603 Péry (CH); Bui, Hoang-Khanh, 2504 Biel (CH)
(74) Mandataire: P&TS SA (AG, Ltd.)

(56) Documents cités:
- EP-A1- 1 617 093
- EP-B1- 1 520 111
- FR-A1- 2 886 995
- US-B1- 6 318 899

## Description

### Domaine technique

La présente invention concerne une pièce mécanique pour applications horlogères. La présente invention concerne plus particulièrement une pièce mécanique comportant un roulement à billes.

### Etat de la technique

L'usage des roulements à billes ne cesse de se répandre et de s'appliquer à différentes technologies. On connait ainsi dans l'état de la technique des pièces mécaniques de très petites dimensions utilisées par exemple en horlogerie, notamment dans les montres bracelets, et dans des dispositifs médicaux ou industriels, et munies de roulements de billes.

Afin d'assurer un frottement réduit, une usure minimale et une diminution du bruit, les roulements à billes de qualité sont les plus souvent isostatiques, c'est-à-dire que chaque bille est en contact avec les bagues internes et externes en trois points de contact uniquement. D'excellents roulements à billes à deux ou quatre points de contacts sont également connus.

Le brevet EP1520111B2 au nom de la demanderesse décrit un exemple de roulement à billes subminiature à trois ou quatre points de contact, pour applications dans le domaine de l'horlogerie. Ce roulement comporte une bague extérieure et deux bagues intérieures, ainsi que des corps roulants réalisés en une céramique d'oxyde de zirconium.

Le roulement à billes décrit dans ce document présente l'avantage d'une très grande durabilité tout en supprimant la nécessite d'une lubrification grâce à l'usage de billes en céramique dures. La bague externe et les bagues internes en acier finissent cependant par s'user suite au frottement avec les billes très dures. Ce document mentionne certes la possibilité de réaliser les bagues intérieures ou extérieures en céramique, mais sans donner d'exemple concret d'une telle mise en oeuvre.

Des essais de construction ont démontré que la réalisation de roulements à billes subminiatures avec des bagues en céramique selon l'enseignement de EP1520111 B2, bien que possible, pose de grandes difficultés. En effet, il est extrêmement difficile de fabriquer avec la précision requise les bagues en céramique qui sont habituellement produites par moulage. Par conséquent, il subsiste souvent un jeu entre les bagues, ce qui conduit à un chemin de roulement pour les billes à l'intérieur du roulement dont les dimensions sont mal contrôlées. L'efficacité d'un tel roulement à billes réalisé avec des bagues en céramique est donc affectée, en sorte qu'en pratique l'homme du métier qui souhaite réaliser un roulement à billes selon l'enseignement de ce document préférera le plus souvent des bagues en acier ou dans un autre métal.

Le document FR 2 886 995 A décrit un roulement à billes pour une montre à remontage automatique avec deux bagues internes, une bague externe et une pluralité de billes.

### Bref résumé de l'invention

Un but de la présente invention est de proposer une pièce mécanique munie d'un roulement à billes à trois ou quatre points de contact pour application horlogères, qui comporte des billes et des bagues en céramique, et qui soit exempt des problèmes de l'art antérieur.

Selon l'invention, ces buts sont atteints notamment au moyen d'une pièce mécanique selon la revendication 1.

Cette construction permet de maintenir la ou les bagues externes contre la surface interne de la douille. La douille peut être réalisée par exemple en acier ou dans un autre métal usinable avec une grande précision. Ainsi, la ou les bagues sont maintenues sans colle, en un emplacement précisément défini.

Cette douille externe peut être munie d'une denture. Ainsi, la douille externe est en acier qui offre l'avantage de pouvoir être usiné avec une très grande précision pour fabriquer une denture de précision, tandis que la bague à l'intérieur de cette douille est en céramique afin de réduire les frottements dans le roulement et d'augmenter leur résistance.

Le roulement comporte une bague interne fixe et deux bagues externes rotatives maintenues par la douille. Cette construction est en particulier adaptée à un roulement à billes destiné à la masse oscillante d'un mouvement horloger pour montre mécanique à remontage automatique. Une cage peut être prévue entre les bagues externes pour séparer les billes. La portion périphérique externe de la douille peut être au moins partiellement filetée, afin de permettre d'y visser un écrou externe vissé sur ce filetage. Cet écrou permet de maintenir en position la masse de remontage. La portion périphérique de la douille comporte une denture périphérique pour transmettre le mouvement oscillatoire de la masse oscillante au mécanisme de remontage du mouvement.

Selon un aspect, la présente invention concerne aussi la fixation d'une masse oscillante à un roulement.

### Brève description des figures

Des exemples de mise en oeuvre de l'invention sont indiqués dans la description illustrée par les figures annexées dans lesquelles :
La figure 1 illustre une vue de dessus d'une pièce mécanique selon une première variante de l'invention (sans écrou et sans la masse oscillante).
La figure 2 illustre une vue de dessus d'une pièce mécanique selon l'invention (avec l'écrou et sans la masse oscillante).
La figure 3 illustre une vue selon la coupe A-A d'une pièce mécanique selon la première variante de l'invention.
La figure 4 illustre une vue de dessus d'une version de pièce mécanique selon une autre deuxième variante de l'invention, comprenant un verrou pour la fixation de la masse oscillante
La figure 5 illustre une vue selon la coupe A-A d'une pièce mécanique selon la figure 4.
La figure 6 illustre une vue en coupe d'une pièce mécanique selon une troisième variante de l'invention.

### Exemple(s) de mode de réalisation de l'invention

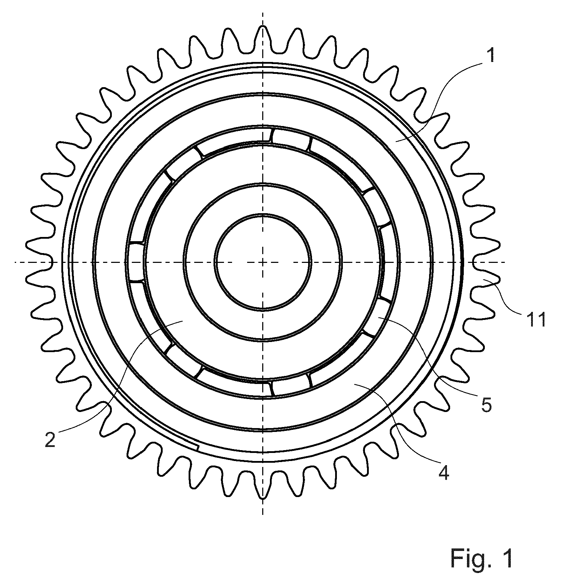

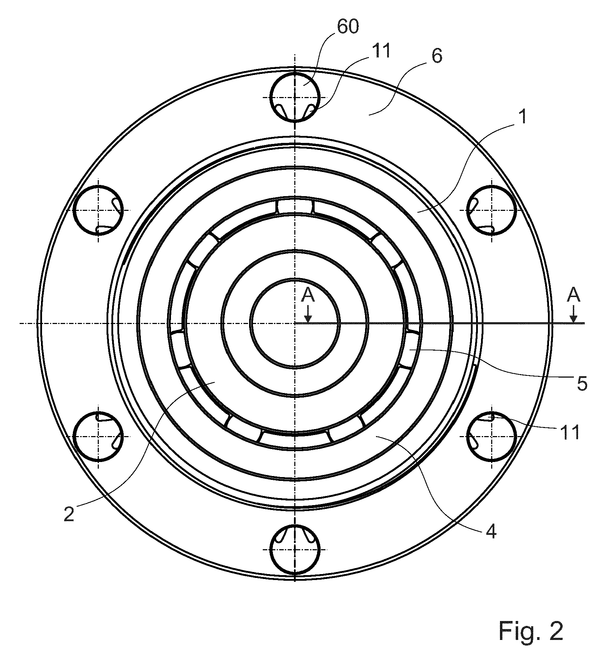

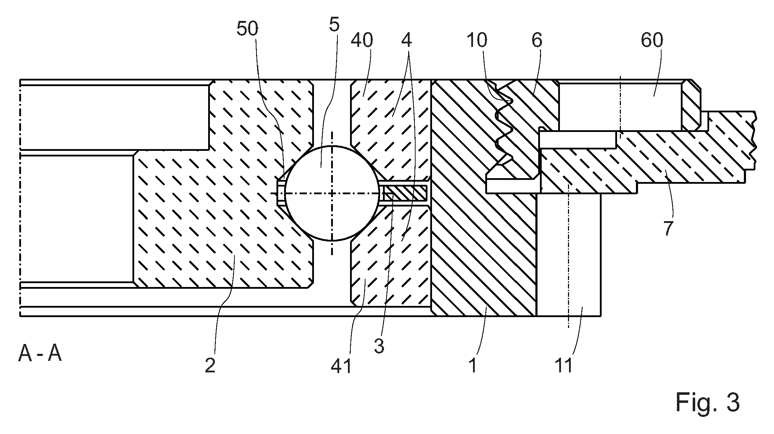

La pièce mécanique illustrée à titre d'exemple sur les figures 1 à 3 est destinée au remontage automatique d'une montre mécanique grâce aux oscillations d'une masse oscillante 7.

La pièce mécanique comporte un roulement à billes avec une bague interne (ou noyau) 2 fixe et deux bagues externes 4 rotatives. La référence 40 désigne la bague externe supérieure et 41 la bague externe inférieure. Les bagues 2, 40, 41 sont préférablement en céramique, par exemple en oxyde de zirconium (ZrO2), et produites par moulage, frittage puis rectification. L'usage de céramique pour les bagues permet de réduire leur usure, et de réduire le frottement tout en rendant la lubrification superflue.

Le roulement comporte en outre des billes 5 en céramique, par exemple des billes sphériques en oxyde de zirconium, ou des billes d'autre forme. L'usage de céramique également pour les billes permet de réduire leur usure, et de réduire le frottement tout en rendant la lubrification superflue. Par ailleurs, comme le même matériau est utilisé pour les bagues et pour les billes, ces différents composants se dilatent dans les mêmes proportions en cas de variation de température, en sorte que les jeux entre ces composants ne varient que peu lorsque la température change.

Les bagues internes et externes définissent un chemin de roulement 50 pour les billes 5, comportant de préférence quatre points de contact entre les billes 5 et les bagues 2, 40, 41. Une cage 3 optionnelle est avantageusement prévue entre les bagues externes supérieures et inférieures et entre les billes, afin de séparer les billes 5 les unes des autres.

La position spatiale des bagues externes 40, 41 est définie par une douille 1 dans laquelle les bagues sont chassées. La douille 1 est avantageusement réalisée en acier ou dans un autre métal usiné avec précision. L'épaisseur de la douille dans la direction perpendiculaire au plan de rotation est sensiblement égale voir légèrement supérieure à l'épaisseur totale des bagues externes, afin de tenir ces bagues fermement, parallèles l'une à l'autre, sans pour autant créer une surépaisseur inutile.

La périphérie externe de la douille 1 comporte une denture périphérique 11 afin de transmettre les rotations de la douille 1 au mouvement de la montre, afin de remonter le ressort de barillet de ce mouvement.

Dans la variante des figures 1 à 3, la douille 1 comporte en outre un filetage externe 10 à la périphérie externe, sur lequel un écrou 6 est vissé. L'écrou 6 permet de maintenir la masse oscillante 7 en la vissant dans des ouvertures 60. Les oscillations de la masse oscillante 7 produites par les mouvements du porteur de la montre sont transmises aux bagues externes 4.

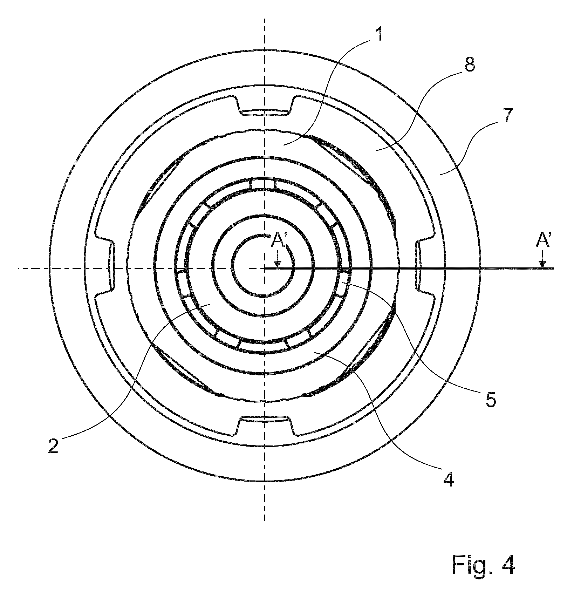

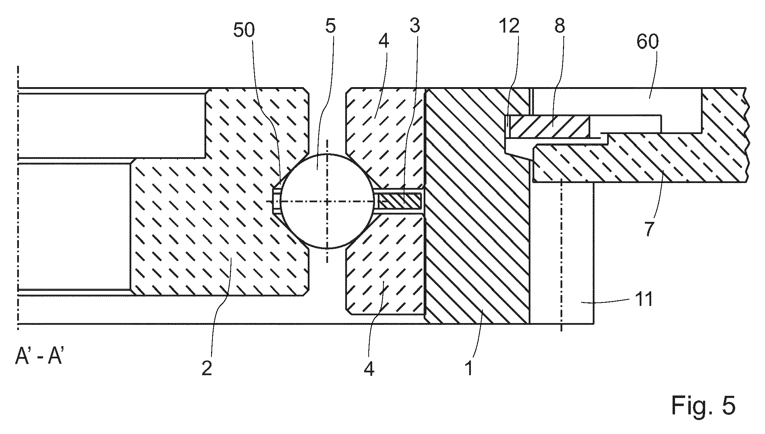

Les figures 4 et 5 illustrent une deuxième variante de pièce mécanique selon l'invention, dans laquelle la périphérie externe de la douille comporte un appui 12 pour un verrou 8 permettant de bloquer la masse oscillante 7 lorsque le verrou 8 est verrouillé en le tournant de quelques degrés de manière à bloquer la masse oscillante.

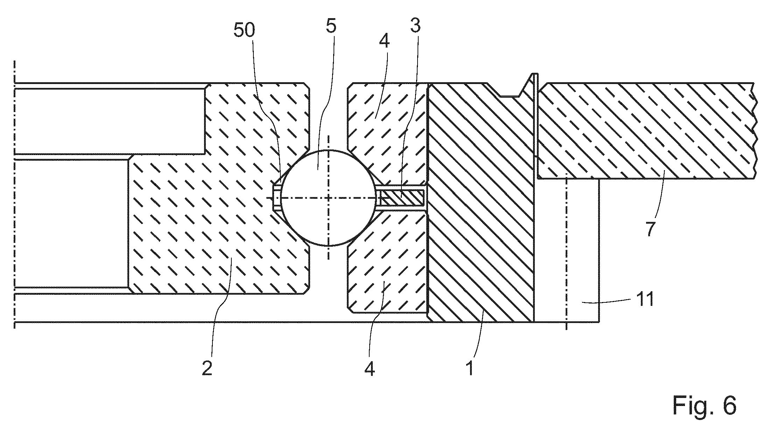

La figure 6 illustre une variante de pièce mécanique selon l'invention, dans laquelle la masse oscillante 7 est sertie ou chassée autour de la douille 1.

La douille 1 est ainsi constituée par une seule pièce en métal qui remplit trois fonctions distinctes : tenir les bagues externes 40, 41 en une position précise ; permettre la fixation de la masse oscillante 7 au travers de l'écrou 6, ou du verrou 8, ou par sertissage ; et engrener avec le rouage du mouvement de montre, au travers de la denture 11.

Dans la solution décrite, toutes les pièces 2, 4, 5 du roulement en frottement permanent lorsque le roulement tourne sont ainsi réalisées dans le même matériau, c'est-à-dire en céramique, de préférence en oxyde de zirconium. Le frottement est ainsi réduit au minimum, ainsi que l'usure puisque cette céramique est très dure et qu'elle frotte uniquement contre des pièces de dureté égale.

La solution revendiquée pourrait aussi être utilisée en horlogerie comme roulement de mobile, roulement de renvoi, roulement de galet etc.

### Numéros de référence employés sur les figures

- 1: Douille
- 10: Filetage de la douille
- 11: Denture périphérique de la douille
- 12: Appui latéral sur la périphérie externe de la douille
- 2: Bague interne (noyau)
- 3: Cage
- 4: Bague externe (cône)
- 40: Bague externe supérieure
- 41: Bague externe inférieure
- 5: Billes
- 50: Chemin de roulement
- 6: Ecrou
- 60: Trou pour outil de serrage
- 7: Masse de remontage oscillante
- 8: Verrou

## Revendications

1. Pièce mécanique destinée au maintien d'une masse oscillante d'un mouvement horloger pour montre mécanique à remontage automatique, comportant un roulement à billes à trois ou quatre points de contact, ledit roulement comportant :
une pluralité de billes (5) en céramique ;
une bague interne (2) en céramique et deux bagues externes (4) en céramique, lesdites bagues interne et externes définissant entre elles un chemin de roulement (50) pour lesdites billes (5) de manière à ce que chaque bille soit en contact avec lesdites bagues en trois ou quatre points, et une douille externe (1) dans laquelle sont logées lesdites bagues externes, lesdites bagues externes (40, 41) pouvant être mises en rotation et maintenues par ladite douille externe,
ladite douille externe (1) étant arrangée pour permettre la fixation d'une masse oscillante (7) au travers d'un écrou (6), ou d'un verrou (8), ou par sertissage,
ladite douille externe (1) étant munie d'une denture périphérique (11) sur sa périphérie externe, destinée à engrener avec un rouage de mouvement de montre.

2. Pièce mécanique selon la revendication 1, comportant une cage (3) entre lesdites bagues externes (40, 41).

3. Pièce mécanique selon la revendication 1 ou 2, la portion périphérique externe (10) de ladite douille (1) étant au moins partiellement filetée, ledit roulement comportant un écrou (6) externe vissé sur ledit filetage.

4. Pièce mécanique selon la revendication 3, comportant une masse oscillante (7) vissée sur ledit écrou (6).

5. Pièce mécanique selon la revendication 1 ou 2, comportant un verrou pour fixer une masse oscillante (7) sur ladite douille (1).

6. Pièce mécanique selon la revendication 1 ou 2, comportant un une masse oscillante (7) sertie ou chassée sur ladite douille (1).

## Patentansprüche

1. Mechanisches Teil zum Halten einer Schwingmasse eines Uhrwerks für eine mechanische Uhr mit Automatikaufzug, umfassend eine Kugellagerung mit drei oder vier Kontaktpunkten, worin die besagte Lagerung umfasst:
eine Vielzahl von Kugeln (5) aus Keramik;
einen Innenring (2) aus Keramik und zwei Aussenringe (4) aus Keramik, worin die Innen- und Aussenringe zwischen sich einen Rollweg (50) für die besagten Kugeln (5) definieren, so dass jede Kugel in Kontakt mit den besagten Ringen in drei oder vier Punkte steht,
und eine Aussenhülse (1), in welcher die besagten Aussenringe untergebracht sind, worin die besagten Aussenringe (40, 41) durch die besagte Aussenhülse in Rotation versetzt und gehalten werden können,
worin die besagte Aussenhülse (1) so angeordnet ist, um das Befestigen einer Schwingmasse (7) durch eine Mutter (6) oder einen Riegel (8) oder durch Crimpen zu ermöglichen,
worin die besagte Aussenhülse (1) mit einer peripheren Verzahnung (11) auf ihrer Aussenperipherie versehen ist und dazu bestimmt, mit einem Räderwerk eines Uhrwerks einzugreifen.

2. Mechanisches Teil gemäss Anspruch 1, mit einem Rohwerk (3) zwischen den besagten Aussenringen (40, 41).

3. Mechanisches Teil gemäss Anspruch 1 oder 2, worin die äussere periphere Portion (10) der besagten Hülse (1) mindestens teilweise gewindet ist, worin die besagte Lagerung eine auf das besagte Gewinde geschraubte Aussenmutter (6) umfasst.

4. Mechanisches Teil gemäss Anspruch 3, mit einer auf die besagte Mutter (6) geschraubten Schwingmasse (7).

5. Mechanisches Teil gemäss Anspruch 1 oder 2, mit einem Riegel zur Befestigung der Schwingmasse (7) auf die besage Hülse (1).

6. Mechanisches Teil gemäss Anspruch 1 oder 2, mit einer auf die besage Hülse (1) gecrimpten oder chassierten Schwingmasse (7).

## Claims

1. Mechanical part designed for holding an oscillating mass of a watch movement for mechanical watch with automatic winding, comprising a ball bearing with three or four contact points, wherein said bearing comprises:
a plurality of balls (5) of ceramics;
an inner ring (2) of ceramics and two outer rings (4) of ceramics, wherein said inner and outer rings define between them a rolling path (50) for said balls (5) so that each ball is in contact with said rings in three or four points,
and an outer sleeve (1) wherein said external rings are housed, wherein said outer rings (40, 41) can be put in rotation and held by said outer sleeve,
wherein said external sleeve (1) is arranged so as to allow an oscillating mass (7) to be fastened via a nut (6) or a bolt (8) or by crimping,
wherein said outer sleeve (1) is provided with a peripheral toothing (11) on its outer periphery designed to mesh with a geartrain of a watch movement.

2. Mechanical part according to claim 1, comprising a frame (3) between said outer rings (40, 41).

3. Mechanical part according to claim 1 or 2, wherein the outer peripheral portion (10) of said sleeve (1) is at least partially threaded, wherein said bearing comprises an external nut (6) screwed on said threading.

4. Mechanical part according to claim 3, comprising an oscillating mass (7) screwed onto said nut (6).

5. Mechanical part according to claim 1 or 2, comprising a bolt for fastening an oscillating mass (7) onto said sleeve (1).

6. Mechanical part according to claim 1 or 2, comprising an oscillating mass (7) crimped or driven onto said sleeve (1).
